Europäisches Patentamt

European Patent Office

Office européen des brevets

(19)

(11) Numéro de publication: **0 105 228**
**B1**

(12) # FASCICULE DE BREVET EUROPÉEN

(45) Date de publication du fascicule du brevet:
**15.01.86**

(21) Numéro de dépôt: **83106904.0**

(22) Date de dépôt: **09.09.83**

(51) Int. Cl.⁴: **B 23 D 21/00**

(54) **Dispositif de tronçonnage d'une pièce tubulaire en matériau rigide, notamment à section ovalisée telle qu'un tuyau en fonte.**

(30) Priorité: **29.09.82 FR 8216390**

(43) Date de publication de la demande:
**11.04.84 Bulletin 84/15**

(45) Mention de la délivrance du brevet:
**15.01.86 Bulletin 86/3**

(84) Etats contractants désignés:
**AT DE GB**

(56) Documents cité:
**DE-B-1 099 488**
**FR-A-2 188 472**
**FR-A-2 377 264**
**GB-A-1 594 665**
**GB-A-2 065 013**

(73) Titulaire: **PONT- A-MOUSSON S.A., 91, Avenue de la Libération, F-54017 Nancy (FR)**

(72) Inventeur: **Fuminier, Claude, 63, rue du Bois le Prêtre, F-54700 Pont- à- Mousson (FR)**

(74) Mandataire: **Weil, Roger, c/o Centre de Recherches de Pont- à- Mousson BP 28, F-54700 Pont- à- Mousson (FR)**

LIBER, STOCKHOLM 1986

EP 0 105 228 B1

## Description

La présente invention a pour objet un dispositif de tronçonnage d'une pièce tubulaire, en matériau rigide, en particulier une pièce à section ovalisée, supportée par un bâti pourvu de galets montés concentriquement autour de la pièce tubulaire, qui est en appui sur ceux-ci, des moyens étant prévus pour entraîner certains au moins des galets en rotation afin de faire tourner la pièce tubulaire autour de son axe, tout en la maintenant fixe en translation, le tronçonnage étant exécuté au moyen d'au moins un outil de coupe comportant une arête tranchante contenue dans un plan radial passant par l'axe de la pièce tubulaire, et du type dans lequel chaque outil de coupe est associé à un galet de guidage sur un support commun.

On connaît par le brevet français N° 79 30 754 (N° 2 471 244) un dispositif de tronçonnage de produits tubulaires pourvu d'outils de coupe radiaux pratiquement insonores et ne dégageant pas de poussière. Ce dispositif permet de pallier les inconvénients (bruit, poussières, dangers et imprécision) des systèmes de tronçonnage utilisant des meules-disques. En outre, ce dispositif permet d'obtenir d'une matière cinématique simple, une variation des vitesses d'approche, de pénétration et de recul des outils de coupe par rapport à l'axe d'un tuyau entraîné en rotation par un étau rotatif.

Or, avec le dispositif de tronçonnage décrit dans ce brevet, si le tuyau à tronçonner est ovalisé, la distance à parcourir par chaque outil de coupe pour traverser la paroi du tuyau varie suivant le rayon de la section ovalisée qui se présente à l'outil, alors que la progression vers l'axe de rotation reste constante. Il y a donc une irrégularité de pénétration de chaque outil de coupe dans la paroi du tuyau et une irrégularité corrélative du profil du chanfrein obtenu.

Le dispositif décrit dans le brevet français n° 76 09 897 (2 306 814), ce document servant à illustrer l'état de la technique, adapté particulièrement à la coupe de tubes en matière plastique au moyen de galets de centrage du tube et d'un outil de coupe disposé entre les deux galets supérieurs, présente le même inconvénient, la pénétration de l'arête de l'outil de coupe dans la paroi du tuyau étant irrégulière lorsue ce tuyau est ovalisé ou elliptique.

L'invention a pour but de remédier à ces inconvénients en proposant un dispositif capable de tronçonner des pièces tubulaires en exécutant un profil de tronçonnage régulier sur tout le pourtour de la section tronçonnée, et ce, que la section de la pièce tubulaire soit rigoureusement circulaire, ou qu'elle soit ovalisée et même elliptique. Dans ces conditions, on peut obtenir sur l'extrémité tronçonnée un chanfrein dont le profil est parfaitement régulier, ce dispositif étant universel par le fait qu'il peut être utilisé au tronçonnage de tous les types de pièces tubulaires dans une gamme de diamètres très étendue.

Suivant l'invention le couple formé par un outil de coupe et son galet rotatif associé est monté sur un charion de support mobile sur une rampe d'un châssis fixe ladite rampe étant inclinée vers le plan vertical contenant l'axe longitudinal de la pièce tubulaire.

Le fait de jumeler mécaniquement l'outil de coupe et le galet correspondant de façon à les positionner dans un même plan radial passant par l'axe de la pièce, et plus précisément de manière que l'arête de l'outil et la génératrice de contact entre le galet et la paroi de la pièce soient dans un même plan contenant l'axe de la piece tubulaire, constitue une caractéristique essentielle de l'invention. Cette disposition permet de maintenir constante la pénétration de l'outil dans la paroi de la pièce tubulaire si le rayon de courbure de cette dernière varie, par exemple si elle est ovalisée ou elliptique. On obtient donc de la sorte des chanfreins tout à fait reguliers sur tout le pourtour d'une pièce à section ovalisée.

Ceci s'explique par le fait que dans ces conditions, la ligne de référence de la position de l'outil de coupe reste toujours la génératrice de contact entre le galet jumelé à l'outil et la paroi du produit tubulaire, lorsque ce dernier tourne autour de son axe.

Le dispositif de tronçonnage comprend un bâti fixe dans lequel est ménagée une ouverture pour le passage de la pièce à tronçonner disposée horizontalement, une série de galets portés par le bâti, disposés coaxialement à la pièce tubulaire pour supporter cette dernière et la maintenir et dont au moins un est relié à des moyens d'entraînement en rotation afin de faire tourner la pièce tubulaire autour de son axe, en restant fixe en translation, et au moins un outil de coupe réglable radialement et apte à exécuter le tronçonnage de la pièce tubulaire.

L'invention a également pour but de permettre le tronçonnage dans une fourchette aussi large que possible, de pièces tubulaires de differents diamètres, sans intervention manuelle ni perte de temps, en conservant les avantages du procédé précité.

En effet, le brevet français 2 308 814 décrit un dispositif adapté pour tronçonner des tuyaux de diamètres différents, dans lequel le tuyau entraîné en rotation est porté par six galets disposés coaxialement à ce tuyau. Les deux galets inférieurs sont montés sur un chariot mobile suivant une direction non radiale mais verticale, qui permet le rapprochement ou l'éloignement du tuyau par rapport aux deux galets supérieurs lorsque l'on change le diamètre du tuyau. L'outil de coupe, non jumelé avec les galets supérieurs, est monté sur un support indépendant, mobile verticalement entre les deux galets supérieurs. Mais les galets sont montés par couples dont les entraxes sont fixes: un couple de galets supérieurs, un couple de galets inférieurs et un couple de galets latéraux. Seul le couple de galets inférieurs est monté mobile sur un chariot déplaçable verticalement, pour pouvoir s'adapter à des tuyaux de différents diamètres.

Or, lorsqu'on rapproche les galets inférieurs des galets supérieurs, on constate qu'il existe un risque de provoquer l'ovalisation de la pièce tubulaire par écrasement, ce qui constitue évidemment un sérieux inconvenient. Par ailleurs, comme indiqué précédemment, ce dispositif antérieur ne permet pas de ceinturer une section tubulaire ovalisée en conservant le contact avec celle-ci sur tout son pourtour, en raison du montage rigide des galets de support, de sorte que dans ce cas le chanfrein obtenu n'est pas régulier.

Le problème de l'adaptation du système de tronçonnage pour le rendre universel afin de lui permettre de tronçonner des tuyaux dans une large gamme de diamètres est également résolu par l'invention.

Dans une forme particulière de réalisation, le dispositif selon l'invention comprend un ensemble de six galets rotatifs de support de la pièce tubulaire à tronçonner, réglables en position pour s'adapter à des pièces de diamètres différents, deux de ces galets étant mécaniquement jumelés chacun à un outil de coupe et montés sous la pièce tubulaire de part et d'autre de celle-ci, symétriquement par rapport au plan vertical longitudinal contenant l'axe de la pièce à tronçonner, lesdits galets étant déplaçables ainsi que les outils de coupe correspondants suivant des axes parallèles à une rampe inclinée de support de chaque couple outil de coupe-galet, et qui sont concourants sur l'axe du galet inférieur central ou au voisinage de cet axe, un quatrième galet étant positionné au-dessus de la pièce et les deux derniers étant montés de chaque côté du quatrième galet supérieur.

Les six galets porteurs sont ainsi montés en hexagone à l'intérieur d'une sorte de lunette de tour, aux positions comparables à des points cardinaux de la rose des vents ou aux heures d'un cadran de montre. On a ainsi un galet inférieur sud (6 heures), un galet supérieur nord (12 heures), deux galets latéraux inférieurs sud-ouest (8 heures) et sud-est (4 heures) portés par des vérins d'axes radiaux, et deux galets latéraux supérieurs nord-ouest (10 heures) et nord-est (2 heures) portés par des vérins orientés suivant les branches d'un V. Le sommet de ce V est normalement sur l'axe du galet inférieur sud, tandis que les deux galets latéraux inférieurs sud-ouest et sud-est, associés chacun à un outil de coupe avec lequel ils sont jumelés mécaniquement, sont portés par deux chariots mobiles suivant deux directions symétriques, inclinées de préférence à 80° par rapport au plan de symétrie nord-sud des axes des galets inférieur et supérieur.

Grâce à cet agencement, la disposition hexagonale des galets de support est conservée, et notamment l'orientation à 80° des couples jumelés sud-ouest et sudest (8 heures et 4 heures) par rapport à la direction nord-sud (8 heures - 12 heures). Ainsi, l'orientation radiale des couples outils - galets (8 heures-4 heures) est maintenue quel que soit le diamètre de tuyau à tronçonner, ce dispositif étant particulièrement bien adapté de la sorte au tronçonnage avec une pénétration constante de l'outil dans la paroi, de pièces tubulaires dont le diamètre varie, même celles-ci sont elliptiques.

D'autres particularités et avantages de l'invention apparaîtront au cours de la description qui va suivre, faite en référence aux dessins annexés qui en illustrent une forme de réalisation à titre d'exemple non limitatif.

La Fig. 1 est une vue schématique en élévation en bout, avec arrachement partiel, d'une forme de réalisation d'un dispositif de tronçonnage de pièces tubulaires selon l'invention.

La Fig. 2 est une vue simplifiée en élévation longitudinale avec arrachements, du dispositif de la Fig. 1.

La Fig. 3 est une vue à échelle agrandie mi-coupe longitudinale mi-élévation d'un couple formé par un outil de coupe et le galet associé en appui sur la paroi de la pièce tubulaire à tronçonner, dans le dispositif des Fig. 1 et 2.

La Fig. 4 est une vue partielle à échelle agrandie par rapport aux Fig. 1 et 2, de la partie terminale de la pièce tubulaire à tronçonner, et des galets de manutention et de maintien axial de cette pièce.

La Fig. 5 est une vue partielle à échelle agrandie, mi-coupe axiale de la partie terminale de la pièce tubulaire ainsi que des galets de manutention et de maintien axial.

La Fig. 6 est une vue en section transversale d'un tuyau ovalisé à tronçonner au moyen d'un dispositif classique, schématiquement représenté, montrant l'irrégularité du chanfrein obtenu.

La Fig. 7 est une vue en section transversale d'une pièce tubulaire à tronçonner, analogue à la Fig. 8 mais le tronçonnage étant exécuté par un dispositif selon l'invention schématiquement représenté, permettant d'obtenir un chanfrein régulier.

La Fig. 8 est une vue schématique en élévation en bout du dispositif de tronçonnage, illustrant la possibilité de celui-ci de s'adapter automatiquement au tronçonnage de produits tubulaires de diamètres différents.

Le dispositif représenté aux dessins est destiné à exécuter le tronçonnage d'une pièce tubulaire T, avec de préférence mais non nécessairement un chanfrein de profil choisi sur l'extrémité tronçonnée, la pièce tubulaire T étant formée en un matériau rigide, notamment du métal, fibrociment, du béton ou de la matière plastique.

La pièce T est, par exemple, un tuyau en fonte, à emboîtement.

Cette pièce T peut être de section aussi bien rigoureusement circulaire qu'ovalisée ou même elliptique.

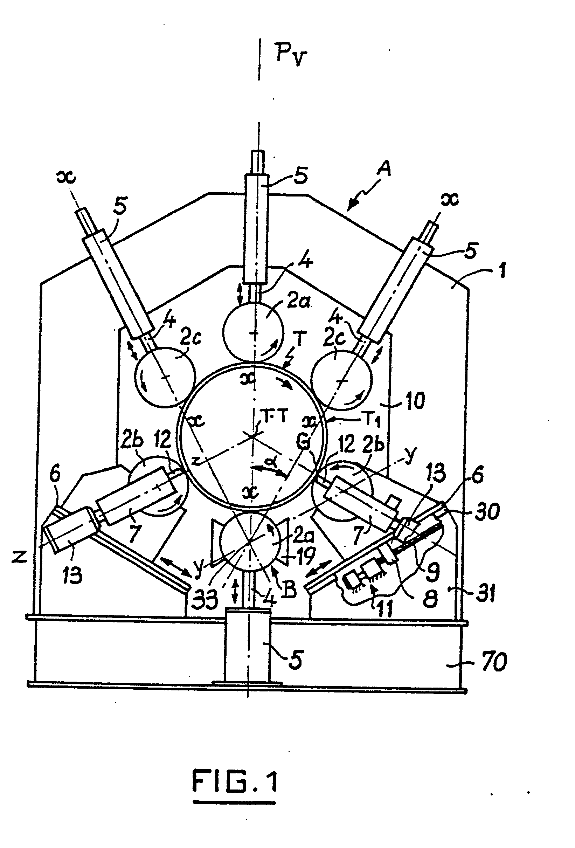

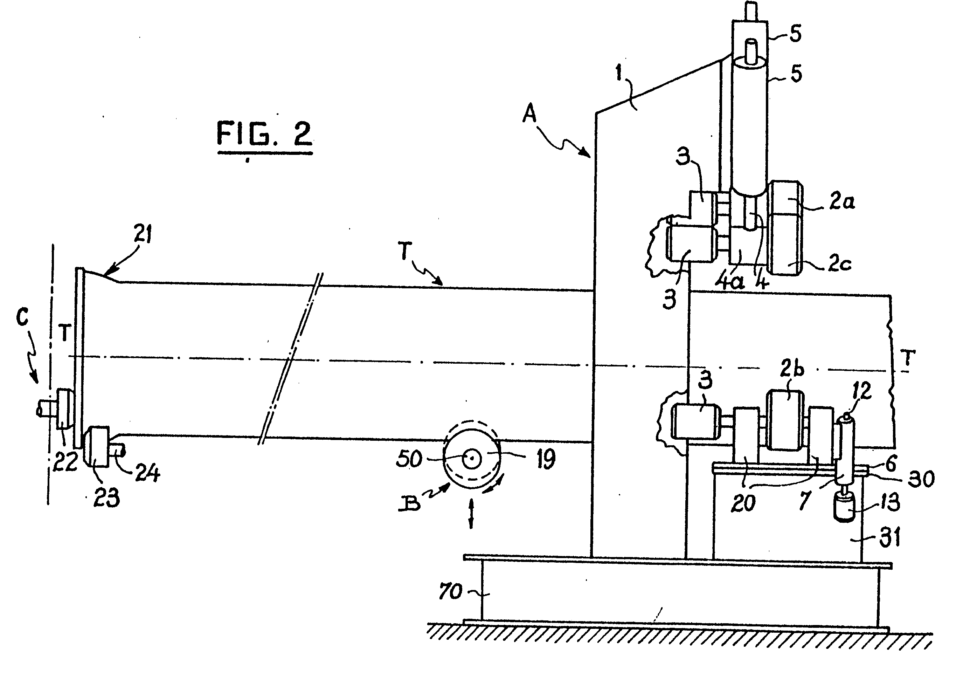

L'installation comporte trois parties principales:
   a) le dispositif de tronçonnage proprement dit A, visible en particulier aux Fig. 1 et 2;
   b) un dispositif de manutention vertical B (Fig. 1 et 2) d'une pièce tubulaire ou tuyau à tronçonner;
   c) un dispositif de maintien axial C (Fig. 2, 4 et 5) d'une pièce T à tronçonner.

### Dispositif de tronçonnage A d'une pièce tubulaire T.

Cette partie de l'installation comprend (Fig. 1 et 2) un bâti fixe 1 dans lequel est ménagée une ouverture 10 pour le passage de la pièce T à tronçonner disposée horizontalement. L'ouverture 10 a, dans cet exemple de réalisation, un pourtour hexagonal, correspondant approximativement au pourtour extérieur du bâti 1, qui repose sur un socle 70.

Le dispositif est équipé, dans cet exemple d'exécution, de six galets rotatifs 2a, 2b, 2c de support de la pièce tubulaire T:

- Un galet supérieur 2a situé au-dessus de la pièce T et dont l'axe se trouve dans le plan vertical $P_V$ contenant l'axe longitudinal T-T de la pièce T. La position angulaire de ce galet sera indiquée ci-après, comme celle des autres galets, en référence à leur position sur le cadran d'une montre. Par conséquent, le galet supérieur 2a est à 12 heures.

- Un galet inférieur 2a, situé sous le tuyau T qui prend appui sur ce galet, dont l'axe 33 est situé dans le plan longitudinal axial $P_V$ de la pièce T. Le galet inférieur 2a est donc situé à 6 heures.

- Deux galets latéraux inférieurs 2b, situés respectivement à 8 heures et à 4 heures, et mécaniquement jumelés avec un outil de coupe 12 comme cela sera expliqué en détail ci-après.

- Deux galets latéraux supérieurs 2c situés respectivement à 10 heures et à 2 heures.

Lorsque la pièce tubulaire T à tronçonner est en place dans le dispositif A, elle prend appui effectivement sur les trois galets inférieurs 2a et 2b, les trois galets supérieurs 2a et 2c assurant le centrage et, conjointement avec les trois autres galets, la rotation de la pièce T.

L'ensemble des galets forme ainsi une couronne constituée de trois galets porteurs 2a, 2b et de trois galets de serrage et de centrage 2a, 2c. Les galets 2a et 2c sont fixés à l'extrémité de la tige 4 d'un vérin 5, les trois vérins 5 supérieurs étant fixés au bâti 1, tandis que le vérin 5 inférieur, portant le galet inférieur central 2a, est encastré dans le socle 70. Les vérins 5 sont à double effet et de préférence pneumatiques. Les galets 2a, 2c sont assujettis à leur tige 4 de support par l'intermédiaire d'une pièce 4a traversée par l'arbre de sortie d'un moteur 3 d'entraînement en rotation du galet correspondant 2a, 2c. Les galets précités, ainsi que les galets latéraux 2b sont disposés du côté du bâti 1 opposé à sa face d'entrée de la pièce T à tronçonner.

Les axes de tous les galets 2a, 2b, 2c sont parallèles à l'axe T-T de la pièce T.

Suivant une particularité essentielle, l'invention prévoit que les deux galets 2b situés à 4 heures et à 8 heures sont chacun montés sur un support 20 (Fig. 2) commun à ce galet 2b et à l'outil de coupe associé 12. Chaque galet 2b est ainsi supporté par l'intermédiaire de son axe de rotation, par deux paliers latéraux du support 20 montés sur un chariot 8 mobile sur une rampe 30 d'un châssis fixe 31 reposant sur un socle 70. La rampe 30 est inclinée vers le plan vertical median $P_V$ contenant l'axe T-T d'un angle convenable, par exemple 60° environ.

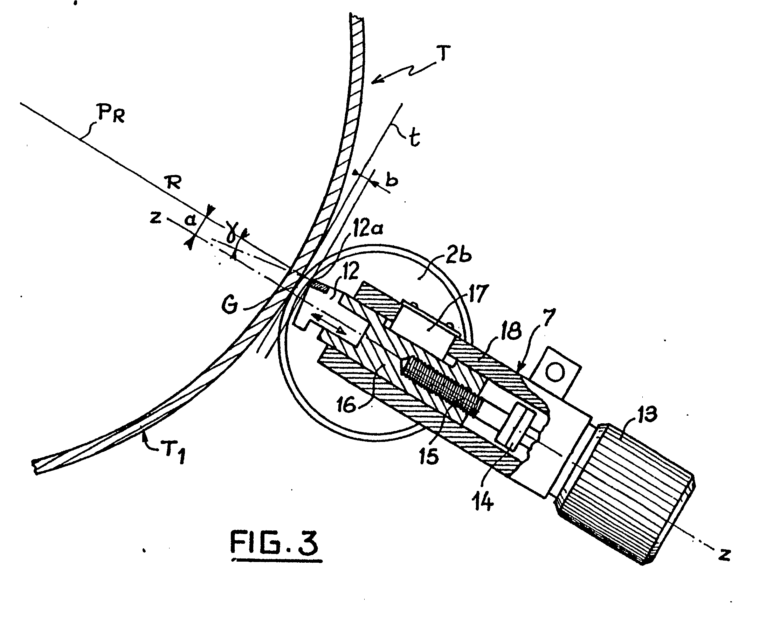

Chaque outil 12 est ainsi mécaniquement jumelé avec le galet associé 2b de support de la pièce T, par l'intermédiaire de leur support commun 20, et l'arête 12a de coupe de l'outil 12 est positionnée de telle sorte qu'elle se trouve pratiquement dans le même plan, ou au voisinage immédiat du plan contenant la génératrice G de contact entre le galet 2b et la paroi $T_1$ du tuyau T, et l'axe T-T de ce dernier (voir notamment Fig. 3).

L'arête 12a se trouve donc dans le plan radial $P_R$ passant par l'axe T-T et la génératrice G.

Chaque chariot porte-outil 8 ainsi que le couple outil 12-galet 2b jumelés mécaniquement dans la direction radiale, peut se déplacer suivant un axe y-y parallèle à la rampe inclinée 30. Les deux axes y-y de déplacement sont en outre concourants sur l'axe 33 du galet inférieur central 2a, ou au voisinage de cet axe. En effet, les vérins 5 sont de préférence pneumatiques, ce qui autorise un léger recul des galets 2a dans le plan vertical $P_V$ lorsque ces galets sont au contact d'une partie ovalisée de la pièce à tronçonner.

Dans l'exemple de réalisation illustré aux dessins, le déplacement du chariot porte-outil 6 sur la rampe 30 est obtenu au moyen d'un groupe moto-réducteur 11 fixé dans le bâti 31 et qui fait tourner une vis 9 pourvue d'un écrou 8 solidaire du chariot 8. Ce dernier peut donc monter ou descendre sur la rampe 30 en fonction du sens de rotation du groupe motoréducteur 11.

De façon connue en soi, l'outil 12 est monté coulissant à l'intérieur d'un support 7 comportant un fourreau cylindrique 18 (Fig. 3) qui contient un écrou 16 susceptible de coulisser dans le fourreau 18 et auquel est fixe l'outil 12. Une vis 15 est engagée axialement dans l'écrou 16 et peut être entraînée en rotation par un accouplement 14 solidaire de l'arbre de sortie d'un moteur 13, du type pas à pas, ou autre, avec codeur angulaire. L'écrou porte-outil 16 étant claveté dans le fourreau 18 par un organe 17 lui assurant un degré de liberté en translation dans le fourreau 18, le moteur d'entraînement 13 permet, selon son sens de rotation, de faire avancer ou de reculer l'outil 12, ce déplacement étant symbolisé par une double flèche sur la Fig. 3.

Le déplacement de l'outil de coupe 12 s'effectue suivant un axe z-z voisin du plan radial $p_R$ contenant l'axe T-T et la génératrice G, dont il est séparé par un intervalle a. L'arête tranchante 12a est formée de façon connue en soi par exemple par une pastille en carbure de tungstène de profil approprié, non seulement au tronçonnage d'une pièce tubulaire (angle de coupe - dépouille), mais aussi à celui du profil souhaité (chanfrein, congé, etc.) sur la partie externe de la pièce T du côté de l'usinage.

La face externe de la pastille, qui contient l'arête 12a, est inclinée d'un angle $\gamma$ sur le plan radial $p_R$, cet angle pouvant être de l'ordre de 6° environ.

Ainsi, les deux outils de coupe 12 sont orientés suivant deux axes de déplacement z-z qui se coupent sensiblement sur l'axe longitudinal T-T et sont symétriques par rapport au plan vertical axial P$_V$. En position d'attente d'usinage, l'extrémité tranchante 12a de chaque outil 12 se trouve légèrement en retrait du tuyau T, d'une distance extrêmement réduite b (Fig. 3), c'est-à-dire en pratique inférieure à 1 mm, de la tangente t au point de contact du galet 2b et du tuyau T.

Le fait que la distance b soit extrêmement faible réduit avantageusement le temps de translation à vide de l'outil 12.

Les deux galets latéraux 2c sont réglables suivant des axes de déplacement x-x, perpendiculaires aux axes respectifs de rotation des galets 2c, disposés en V et symétriques par rapport au plan vertical axial P$_V$ de la pièce T. Les axes x-x sont donc contenus dans un plan perpendiculaire au plan longitudinal axial P$_V$ et se coupent sur l'axe 33 du galet inférieur central 2a, ou au voisinage de cet axe, du fait que comme indiqué précédemment, le passage d'une section ovalisée de la pièce tubulaire à tronçonner sur le galet inférieur 2a fait reculer légèrement ce dernier.

En d'autres termes, les axes des vérins 5 des galets 2c (10 heures et 2 heures) forment un V dont le sommet est sensiblement au centre du galet 2a (6 heures). Ainsi chaque axe x-x est incliné sur le plan vertical P$_V$ d'un angle α égal à 30° environ, tandis que les axes z-z forment entre eux un V dont les branches sont ouvertes à 120°, le centre de ce V étant sensiblement sur l'axe T-T.

Enfin, les galets supérieur et inférieur 2a sont réglables radialement dans le plan vertical axial P$_V$, dans lequel sont placés leurs vérins respectifs 5 de commande.

## Description du système de manutention vertical B de la pièce tubulaire T (Fig: 1 et 2).

Ce dispositif, connu en soi, ne sera que brièvement décrit. Il a pour fonction de positionner axialement et horizontalement la pièce tubulaire T juste avant puis pendant son introduction entre les galets 2a, 2b, 2c effacés de la machine de tronçonnage A. Ce ststème comporte principalement un diabolo 19 tournant fou autour d'un axe 50 horizontal, susceptible d'être déplacé verticalement et perpendiculairement à l'axe T-T par des moyens connus et non représentés.

Pendant l'opèration de tronçonnage, le diabolo 19 se trouve au plus bas de sa course, c'est-à-dire que les lignes de portance radiales et tangentielles des deux parties tronconiques qui le constituent ne sont pas en contact avec la pièce T.

Le système de manutention B est positionnè entre le dispositif de manutention axial C et le dispositif de tronçonnage A, au plus près de ce dernier.

## Dispositif de manutention et de maintien axial C du tuyau T (Fig. 2, 4 et 5).

Ce dispositif permet d'introduire horizontalement et sur la longueur voulue la pièce T à l'intérieur de la couronne formée par les galets 2a, 2b, 2c dans leur position escamotée, et il assure le maintien axial de la pièce T pendant le tronçonnage.

La partie terminale profilée 21 (emboîtement) du tuyau T la plus éloignée de la machine à tronçonner A prend appui sur deux galets 23 de support, symétriques par rapport au plan vertical axial P$_V$, dont les axes de rotation 24 sont parallèles à l'axe T-T et qui tournent fous autour de ceux-ci.

Suivant une particularité de l'invention, les moyens de maintien axial de la pièce T comprennent également un galet 22 disposé à l'intérieur de la pièce T et présentant une gorge périphérique centrale 22a agencée pour recevoir un bourrelet annulaire 51 formant le profil intérieur de l'emboîtement 21. La section de ce bourrelet saillant 51 peut varier suivant les tuyaux à tronçonner, la géométrie de la gorge 22a étant prévue pour permettre au bourrelet intérieur 51 de s'y emboîter quel que soit le profil de ce dernier.

Les deux profils de la gorge 22a et du bourrelet correspondant sont donc en quelque sorte conjugués, le galet 22 assurant ainsi un pincement du tuvau T contre les galets d'appui 23, un mécanisme connu en soi et non représenté supportant les galets 22, 23.

De même, des moyens connus et non représentés assurent le positionnement axial du tuyau T et son maintien pendant le tronçonnage, grâce aux galets 22, 23 qui pincent la partie terminale 21.

On décrira maintenant la mise en oeuvre du dispositif qui vient d'être décrit.

## Mise en oeuvre de l'installation de tronçonnage.

On suppose la pièce tubulaire T positionnée convenablement en hauteur et à la longueur désirée, grâce aux organes de manutention verticale B et de maintien axial C. Chronologiquement, le processus se déroule comme suit.

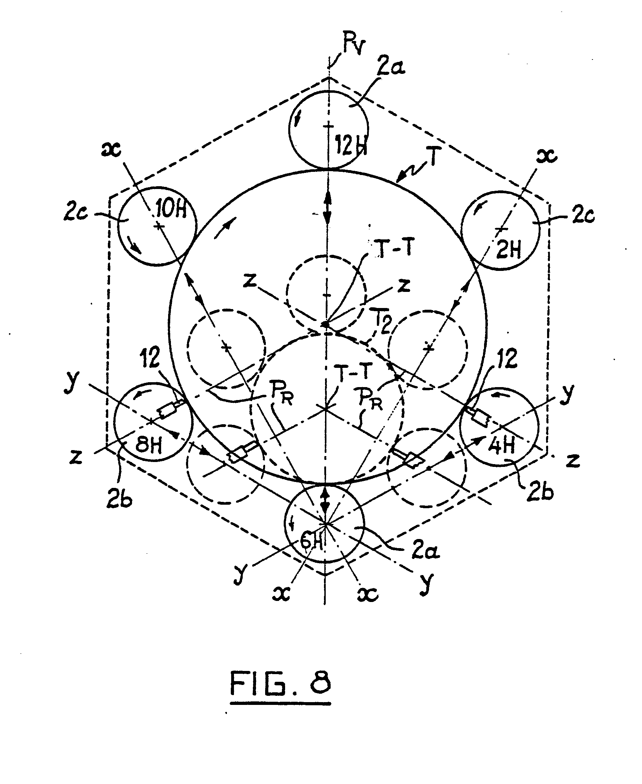

- On fait avancer simultanément les galets 2b de 4 heures et 8 heures dans la direction 6 heures, suivant les axes y-y, comme illustré à la Fig. 8 par les positions respectives en traits continus et en traits interrompus des galets 2b. La position en traits continus correspond à un tuyau T de grand diamètre, représenté également en traits continus, tandis que la position illustrée en traits interrompus des galets 2b correspond à un tuyau T2 de diamètre très inférieur à celui du tuyau T. La descente des galets 2b est obtenue par glissement de leur chariot de support 6 sur les glissières 30, commandé par les motoréducteurs 11, eux-mêmes contrôlés par un système automatique programmé, connu en soi et non représenté. L'avance des galets 2b est donc poursuivie jusqu'à ce que les chariots 6 aient reçu l'ordre d'arrêt par le système automatique de commande, quand les galets 2b viennent au contact de la paroi T₁ du tuyau T.

- On abaisse le diabolo 19 jusqu'à refus, le tuyau T étant corrélativement mis en appui sur les galets 2b.

- On serre le tuyau T entre l'ensemble des six galets 2a, 2b, 2c sous la poussée axiale des quatre vérins 5. Consécutivement, le tuyau T est mis en rotation autour de son axe T-T par les galets 2a, 2c, eux-mêmes entraînés en rotation par leur moteur respectif 3. Le sens de rotation des galets est symbolisé par les flèches portées par la Fig. 1.

- On provoque une avance incrémentale, donc pas à pas, des outils de coupe 12 en direction de l'axe T-T du tuyau T, suivant les axes de déplacement radiaux z-z, et ce sous l'effet des impulsions émises par le système automatique de commande. Chaque outil 12 avance sous l'effet de la poussée axiale de son écrou de support 16, lui-même entraîné par le moteur 13, par l'intermédiaire des organes 14 et 15, le mouvement de rotation du moteur 13 étant transformé en un mouvement de translation axiale de l'écrou porte-outil 16. Chaque outil 12 est décalé par rapport à l'autre d'une certaine distance par le mécanisme automatique, et qui correspond aux possibilités optimales d'usinage de la matière. Le nombre de pas et de passes pour chaque outil 12 est optimisé par le mécanisme automatique de commande en fonction du diamètre de la pièce T, mesurée automatiquement à son entrée dans l'installation. Ceci permet de limiter les pertes de temps à vide, c'est-à-dire que l'outil 12 arrête deprogresser vers l'axe T-T et recule pratiquement aussitôt après avoir débouché à travers la paroi T₁.

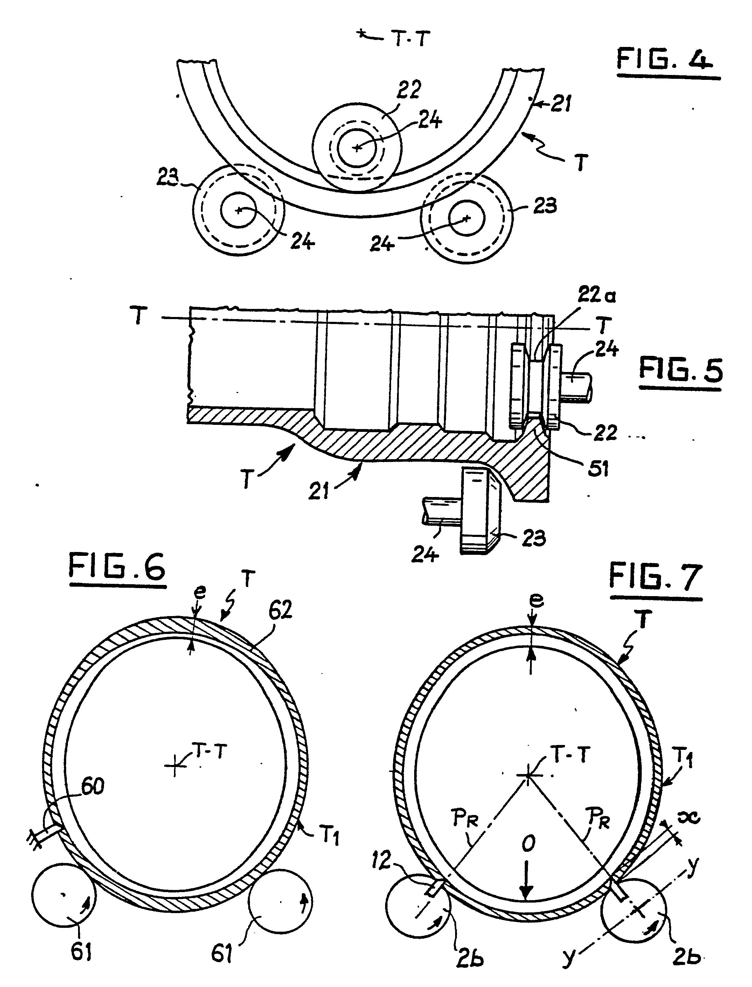

Si la section du tuyau T à tronçonner est ovalisée, ou même elliptique (Fig. 7), la pénétration x des deux outils 12 reste régulière et constante sur tout le pourtour de la pièce T, et ce grâce au jumelage mécanique de chaque outil 12 avec le galet d'appui 2b associé, de telle sorte que l'arête 12a de coupe et la génératrice G de contact du galet 2b sur le tuyau T soient contenues dans un plan radial passant par l'axe T-T comme expliqué précédemment.

En effet, les porte-outil 16, situés à 4 heures et à 8 heures, et dirigés radialement par rapport à la section à tronçonner, progressent radialement suivant les axes z-z, pas à pas d'un même nombre de pas comptés à partir de la génératrice G de contact entre les galets 2a et la paroi T₁; ceci est vérifié quelle que soit la variation du rayon du tuyau T si celui-ci est ovalisé, car le galet 2b qui guide le porte-outil 16 avec lequel il est jumelé mécaniquement, reste en contact avec la paroi T₁ du tuyau T. En d'autres termes, la pénétration de l'outil de coupe 12 dans la paroi T₁ reste constante à partir de la paroi extérieure du tuyau T quel que soit le rayon de courbure de la section ovalisée 0 (Fig. 7), puisque cette pénétration est mesurée à partir de la génératrice de contact G.

Dans ces conditions, on obtient un chanfrein de largeur x rigoureusement constante sur tout le pourtour du tuyau ovalisé T, comme on le voit sur la Fig. 7. A titre comparatif avec la technique antérieure, illustrée à la Fig. 6 et dans laquelle l'outil de coupe 60 est mécaniquement séparé des galets de support 61, donc non jumelé avec ceux-ci comme dans le dispositif prévu par l'invention, l'arête tranchante excécute un chanfrein 62 dont la largeur est irrégulière dans un tuyau ovalisé T. En effet, malgré une progression radiale régulière de l'arête de coupe vers l'axe de rotation du tuyau T, la pénétration de cette arête dans la paroi est irrégulière, étant plus faible là où le rayon de courbure diminue, et plus forte là où le rayon de courbure de la section augmente. Ceci s'explique par le fait que l'outil de coupe 60 se rapproche radialement pas à pas de l'axe de rotation T-T de façon constante, alors que l'ovalisation du tuyau entraîne une variation de l'écart initial de l'arête de coupe avec la paroi à tronçonner.

La Fig. 7 représente bien entendu un stade intermédiaire du tronçonnage, au cours duquel les outils 12 ont pénétré dans la paroi T1 d'une largeur x, le tronçonnage étant naturellement terminé lorsque les outils 12 ont penetré sur toute l'épaisseur e dans la paroi T₁. Les outils sont alors retirés jusqu'à la position escamotée représentée à la Fig. 3, en attendant l'opération suivante de tronçonnage.

Lorsque le diamètre de la pièce T à tronçonner varie, on modifie les positions des galets, sauf le galet central inférieur 2a, de la manière suivante (Fig. 8).

Dans l'ordre, chaque couple outil 12-galet 2b est déplacé suivant son axe y-y par glissement du chariot 6 sur la glissière 30 jusqu'à ce que les galets 2b viennent au contact de la paroi du tuyau, par exemple T2, tout en restant symétriques par rapport au galet 2a de 6 heures. L'orientation suivant les lignes z-z des supports d'outil 7 est bien entendu maintenue pendant la translation des couples outil 12-galet 2b, c'est-à-dire suivant un angle de 60° sur la direction 6 heures-12 heures. Ainsi, les arêtes tranchantes 12a se trouvent toujours dans les plans radiaux P_R contenant l'axe T-T et la génératrice de contact G.

On abaisse ensuite les galets 2c par actionnement de leurs vérins de commande 5, suivant les axes x-x. L'orientation en V des vérins 5 de 10 heures et 2 heures permet aux galets correspondants 2c de trouver encore la place nécessaire sur la périphérie de la section tubulaire T2 à tronçonner, en s'insérant entre les galets de 12 heures, quatre heures et 8 heures lorsque le diamètre du tuyau T diminue. En effet, si le déplacement des galets 2c (10 heures et 2 heures) était orienté 3 60°, c'est-dire radialement vers l'axe de rotation T-T, ces deux galets viendraient rapidement se bloquer sur le galet 2a de 12 heures lorsque la section tubulaire diminue, de sorte que l'on ne pourrait plus rapprocher les galets 2c et que l'on devrait se contenter de guider la section tubulaire avec quatre galets au lieu de six.

Cette particularité du montage et de l'orientation des galets latéraux 2c présente donc un avantage important.

Après exécution du tronçonnage, on sépare le tuyau T de sa chute, et on commande un recul rapide des outils 12 jusqu'à leur position de repos escamotée (Fig. 3), c'est-à-dire jusqu'à ce que l'arête 12a se trouve légèrement en retrait d'un intervalle b de la tangente t à la périphérie du galet associé 2b.

On recule ensuite les galets 2c et le galet supérieur 2a jusqu'à refus, sous l'effet des vérins respectifs.

On remonte le diabolo 19 jusqu'à ce qu'il supporte le tuyau T à la place des galets 2b. Ces derniers sont reculés suivant les axes y-y par remontée de leurs chariots de support 6, et le galet inférieur 2a est abaissé. Enfin on dégage le galet de pincement 22 et on évacue le tuyau T par un moyen de manutention connu en soi et non représenté.

Le dispositif selon l'invention présente les avantages importants ci-dessous.

1.- Tout d'abord, comme déjà indiqué, l'association de chaque outil de coupe 12 et d'un galet 2b par jumelage mécanique de la façon décrite, autorisant une progression radiale de ce couple 12-2b pendant le tronçonnage, permet d'obtenir un profil d'usinage (chanfrein, congé,...) parfaitement régulier quelle que soit la variation du rayon de courbure du tuyau T, que peut donc être ovalisé ou même elliptique.

2.- L'arête tranchante 12a de chaque outil reste dans le plan radial $P_R$ de la section à tronçonner, qui passe par l'axe de chaque galet 2b, au cours du tronçonnage. Quel que soit le diamètre du tuyau, cette disposition radiale est conservée grâce au montage du chariot porte-outil 6 sur la rampe inclinée 30, qui permet une translation suivant la direction y-y.

3.- Le recul de l'outil 12 par rapport à la tangente t au point de contact entre le galet 2b et la paroi $T_1$, est très faible (intervalle b). Ceci limite considérablement les pertes de temps pour passer de la phase de repos à la phase de travail.

4 - Il est possible d'augmenter le nombre des outils 12 à condition de respecter la règle consistant à maintenir l'arête tranchante 12a au droit du contact galet 2b-tuyau T et dans un plan radial $P_R$ de la section à tronçonner. On pourrait ainsi placer un outil à 6 heures et un autre à 12 heures.

5.- Le dispositif de tronçonnage A est universel sous le rapport de l'admission des divers diamètres de tuyaux T, et ce grâce à la disposition et à l'orientation des vérins 5 et des chariots porte-outil 6.

6.- On peut optimiser le nombre de galets porteurs (pour le tuyau et les outils de coupe), les moteurs et les organes de serrage en fonction des diamètres, des épaisseurs et de la dureté de la matière à usiner, en prenant également en considération les risques de déformation du tuyau ainsi que les couples d'entraînement de ces derniers en fonction de la réaction opposée par les outils de coupe.

7.- L'avance incrémentale des outils 12 permet de connaître en permanence leur position grâce au compteur-décompteur après sélection, qui commande chaque outil. Grâce à la motorisation incrémentale des outils, il est possible d'optimiser la longueur des pas et le nombre de passes pour un usinage donné, ce qui permet une économie de temps et d'énergie en évitant les passes à vide.

8.- Le maintien axial du tuyau T avec trois galets 22, 23 dont un galet pinceur 22 à profil approprié, permet d'accepter divers types de profils des parties terminales 21 du tuyau T.

L'invention n'est pas limitée au mode de réalisation décrit ci-dessus et peut comporter de nombreuses variantes d'exécution. On peut ainsi faire varier le nombre de galets ainsi que leur orientation angulaire. De même, on peut déplacer les couples constitués par les outils 12 et leur galet associé 2b suivant les axes y-y par tout autre moyen équivalent à ceux décrits et l'axe z-z peut être situé dans le plan radial $P_R$.

**Revendications**

1.- Dispositif de tronçonnage d'une pièce tubulaire (T), en matériau rigide, en particulier une pièce à section ovalisée, supportée par un bâti (1) pourvu de galets (2a, 2b, 2c) montés concentriquement autour de la pièce tubulaire (1), qui est en appui sur ceux-ci, des moyens étant prévus pour entraîner certains au moins des galets en rotation afin de faire tourner la pièce tubulaire (1) autour de son axe (T-T), tout en la maintenant fixe en translation, le tronçonnage étant exécuté au moyen d'au moins un outil (12) de coupe comportant une arête tranchante (12a) contenue dans un plan radial (PR) passant par l'axe (T-T) de la pièce tubulaire (T), et du type dans lequel chaque outil (12) de coupe est associé à un galet (2b) de guidage sur un support commun (20), ce dispositif étant caractérisé en ce que le couple formé par un outil de coupe (12) et son galet rotatif associé (2b) est monté sur un chariot (6) de support mobile sur une rampe (30) d'un châssis fixe (31) ladite rampe étant inclinée vers le plan vertical contenant l'axe longitudinal (T-T) de la pièce tubulaire (T).

2.- Dispositif selon la revendication 1 caractérisé en ce qu'il comporte au moins un galet (2c) et de préférence deux, réglable suivant un axe (X-X) perpendiculaire à une droite horizontale contenue dans le plan vertical axial de la pièce tubulaire (T) et constituant l'axe de rotation (33) d'un galet inférieur central (2a), ledit axe (X-X) ayant une inclinaison appropriée (α) sur ce plan vertical axial.

3.- Dispositif selon la revendication 2, caractérisé en ce qu'il comprend un ensemble de six galets rotatifs (2a, 2b, 2c) de support de la pièce tubulaire (T) à tronçonner, réglables en position pour s'adapter à des pièces de diamètres différents, deux de ces galets (2b) étant mécaniquement jumelés chacun à un outil de coupe (12) et montés sous la pièce tubulaire (T) de part et d'autre de celle-ci symétriquement par rapport au plan vertical axial contenant l'axe (T-T) de la pièce à tronçonner, lesdits galets (2b) étant déplaçables ainsi que les outils de coupe (12) correspondants suivant des axes (Y-Y) parallèles à la rampe inclinée (30) de support de chaque couple outil de coupe (12)- galet (2b) et qui sont concourants sur l'axe (33) du galet inférieur central (2a), ou au voisinage de cet axe, un quatrième galet (2a) étant positionné au-dessus de la pièce (T) et les deux derniers (2c) étant montés de chaque côté du quatrième galet supérieur (2a).

4.- Dispositif selon la revendication 3, caractérisé en ce que les deux galets (2c) placés de chaque côté du galet supérieur (2a) sont reglables suivant des axes (X-X) en V, symétriques par rapport au plan vertical axial (Pv) contenant l'axe (T-T) de la pièce tubulaire, contenus dans un plan perpendiculaire à ce plan longitudinal et qui se coupent sur l'axe (33) du galet inférieur (2a) ou au voisinage de cet axe (33), tandis que les galets supérieur et inférieur (2a) sont réglables radialement dans le plan longitudinal vertical axial.

5.- Dispositif selon l'une des revendications 3 et 4, caractérisé en ce que les galets supérieur et inférieur (2a, 2c) sont montés sur les tiges (4) de verins (6) fixés au bâti (1) du dispositif et peuvent etre entraînés en rotation par des moteurs (3) supportés par ces tiges (4).

6.- Dispositif selon la revendication 1 caractérisé en ce que, pour chaque position sur sa rampe inclinée (30) d'un couple outil de coupe (12)-galet correspond (2b), l'arête (12a) de l'outil (12), entraîné par un organe moteur (13) approprié, peut être avancée ou reculée dans le plan contenant l'axe longitudinal (T-T) de la pièce tubulaire et la génératrice (6) de contact du galet (2b) avec la paroi (T 1) ou voisin de ce plan, le chariot (6) de support de l'outil (12) et du galet (2b) étant entraîné en translation sur la rampe inclinée (30) par exemple au moyen d'un système vis-écrou (8, 9) actionné par un moto-réducteur (11) logé dans le châssis fixe (31) supportant le chariot (6), l'écrou (8) étant solidarisé avec le chariot mobile (6).

7.- Dispositif selon la revendication 1 destiné à tronçonner une pièce tubulaire (T) pourvue d'un emboîtement (21) devant prendre appui sur des moyens de manutention et de maintien axial de ladite pièce (T) comportant des galets (23) disposés sous l'emboîtement, caractérisé en ce que lesdits moyens comprennent un galet (22) disposé à l'intérieur de la pièce (T) contre le bord de son emboîtement (21), une gorge annulaire (22a) agencée pour recevoir le profil intérieur correspondant dudit emboîtement étant ménagée dans la périphérie de ce galet intérieur (22), qui peut serrer ainsi l'emboîtement (21) de la pièce (T) contre les galets inférieurs (23) de support.

**Patentansprüche**

1. Sinrichtung zum Abtrennen eines Rohrstücks (T) aus steifem Material, insbesondere mit ovalem Querschnitt, bei der das Rohrstück von einem mit konzentrisch um dieses herum angeordneten Rollen (2a, 2b, 2c) versehenen Gestell (1) getragen wird, das Rohrstück auf den Rollen aufliegt und Mittel zum Antreiben mindestens einiger dieser Rollen vorgesehen sind, um das Rohrstück (T) um seine Achse (T-T) zu drehen, während es gegenüber Verschiebungen festgehalten wird, und die mindestens ein Schneidwerkzeug (12) mit einer in einer radial zur Achse (T-T) des Rohrstücks (T) verlaufenden Ebene (PR) gelegenen Schneide (12a) aufweist und bei der jedes Schneidwerkzeug (12) einer auf einem gemeinsamen Träger (20) angeordneten Führungsrolle (2b) zugeordnet ist,
dadurch gekennzeichnet,
daß das Paar bestehend aus einem Schneidwerkzeug (12) und seiner zugeordneten drehbaren Rolle (2b) auf einem Trägerwagen (6) angebracht ist, der auf einer Rampe (30) eines festen Rahmens (31) beweglich ist, wobei die Rampe zu der vertikalen Ebene hin geneigt ist, die die Längsachse (T-T) des Rohrstücks (T) beinhaltet.

2. Einrichtung nach Anspruch 1,
gekennzeichnet durch
mindestens eine Rolle (2c), vorzugsweise zwei Rollen, die längs einer Achse (X-X) einstellbar ist (sind), die senkrecht zu einer horizontal verlaufenden Achse liegt, die wiederum in der vertikalen axialen-Ebene des Rohrstücks (T) liegt, wobei die horizontale Achse die Drehachse (33) einer unteren zentralen Rolle (2a) bildet und die Achse (X-X) bezüglich der vertikalen axialen Ebene eine passende Neigung ($\alpha$) hat.

3. Einrichtung nach Anspruch 2,
gekennzeichnet durch
sechs drehbare Rollen (2a, 2b, 2c) zum Tragen des zu trennenden Rohrstücks (T), die zur Anpassung an Stücke mit verschiedenen Durchmessern in ihrer Stellung einstellbar sind,
wovon zwei Rollen (2b) jeweils mechanisch an ein Schneidwerkzeug (12) gekoppelt und zu beiden Seiten des Rohrstücks unter diesem und symmetrisch zur vertikalen, die Achse (T-T) des zu schneidenden Rohrstücks enthaltenden Ebene angeordnet sind,
wobei die Rollen (2b) sowie die entsprechenden Schneidwerkzeugs (12) längs zu der geneigten Trägerrampe (30) für jedes Schneidwerkzeug(12)-Rollen(2b)-Paar parallelen Achsen (Y-Y) verschiebbar sind, und die Achsen (Y-Y) auf der Achse (33) der unteren zentralen Rolle (2a) oder in der Nähe dieser Achse zusammenlaufen, und wobei eine vierte Rolle (2a) oberhalb des Rohrstücks (T) angebracht ist und die letzten beiden Rollen (2c) zu beiden Seiten der vierten oberen Rolle (2a) angeordnet sind.

4. Einrichtung nach Anspruch 3,
dadurch gekennzeichnet,
daß die beiden zu beiden Seiten der oberen Rolle (2a) angeordneten Rollen (2c) längs der Achsen (X-X) einstellbar sind, die miteinander ein V bilden, symmetrisch bezüglich der vertikalen axialen Ebene (PV), die die Achse des Rohrstücks (T) enthält, angeordnet und in einer zu dieser Längsebene senkrechten Ebene enthalten sind und die sich auf der Achse (33) der unteren Rolle (2a) oder in der Nähe dieser Achse (33) schneiden, während die obere und die untere Rolle (2a) radial in der axialen vertikalen Längsebene einstellbar sind.

5. Einrichtung nach Anspruch 3 oder 4,
dadurch gekennzeichnet,
daß die oberen und unteren Rollen (2a, 2c) auf Stangen von Rolben-Zylindereinheiten (5) montiert sind, die am Gestell (1) der Sinrichtung befestigt sind und mittels Motoren (3), die an diesen Stangen angelenkt sind, angetrieben werden können.

6. Einrichtung nach Anspruch 1,
dadurch gekennzeichnet,
daß in jeder Stellung eines Paares, bestehend aus einem Schneidwerkzeug (12) und einer entsprechenden Rolle (2b), auf seiner geneigten Rampe (30) die Schneide (12a) des durch ein entsprechendes Antriebsorgan (13) angetriebenen Schneidwerkzeugs (12) vorgetrieben oder zurückgeholt werden kann, in einer Ebene oder in der Nähe dieser Ebene, die die Längsachse (T-T) des Rohrstücks und die Erzeugende (G) des Auflagepunkts der Rolle (2b) auf der Mantelfläche (T1) umfaßt, und daß der Wagen (6) zum Tragen des Werkzeugs (12) und der Rolle (2b) auf der geneigten Rampe (30) mittels eines Spindel-Schraubenmutter-Systems (8, 9) bewegt wird, das von einem Reduktionsgetriebemotor angetrieben wird, der in dem den Wagen (6) tragenden Rahmen (31) angeordnet ist, wobei die Schraubenmutter (8) am beweglichen Wagen (6) befestigt ist.

7. Einrichtung nach Anspruch 1
zum Abtrennen eines Rohrstücks (T), das mit einer Schäftung (21) versehen ist, wobei das Rohrstück auf Vorrichtungen zum Handhaben und zur axialen Halterung aufliegt und diese Vorrichtungen unter der Schäftung angeordnete Rollen (23) aufweisen,
dadurch gekennzeichnet,
daß die Vorrichtungen eine im Inneren des Rohrstücks (T) gegen den Rand der Schäftung (21) angedrückte Rolle (22) aufweisen und daß in diese innere Rolle (22) eine Ringnut (22a) eingearbeitet ist, die das entsprechende Innenprofil der Schäftung aufnimmt, wobei die Innenrolle (22) somit die Schäftung (21) des Rohrstücks (T) gegen die unteren Trägerrollen (23) drücken kann.

## Claims

1. Device for cutting a tubular casting (T), of rigid material, into sections, in particular a casting having an ovalised section, supported by a frame (1) provided with rollers (2a, 2b, 2c) mounted concentrically around the tubular casting (1), which is supported on the latter, means being provided for setting at least certain of the rollers in rotation in order to rotate the tubular casting (1) about its axis (T-T), whilst preventing it from moving longitudinally, cutting into sections being carried out by means of at least one cutting tool (12) comprising a cutting edge (12a) contained in a radial plane (PR) passing through the axis (T-T) of the tubular casting (T) and of the type in which each cutting tool (12) is associated with a guide roller (2b) on a common support (20), this device being characterised in that the pair formed by a cutting tool (12) and its associated rotary roller (2b) is mounted on a support carriage (6) able to move on a ramp (30) of a fixed frame (31), the said ramp being inclined towards the vertical plane containing the longitudinal axis (T-T) of the tubular casting (T).

2. Device according to Claim 1, characterised in that it comprises at least one and preferably two rollers (2c) which are adjustable along an axis (X-X) perpendicular to a horizontal straight line contained in the axial vertical plane of the tubular casting (T) and constituting the axis of rotation (33) of a lower central roller (2a), the said axis (X-X) having an appropriate inclination ($\alpha$) on this axial vertical plane.

3. Device according to Claim 2, characterised in that it comprises a set of six rotary rollers (2a, 2b, 2c) for supporting the tubular casting (T) to be cut into sections, which are adjustable in position in order to be adapted to castings of different diameters, two of these rollers (2b) being paired mechanically respectively with a cutting tool (12) and mounted below the tubular casting (T) on either side of the latter symmetrically with respect to the axial vertical plane containing the axis (T-T) of the casting to be cut into sections, the said rollers (2b) being able to move as well as the corresponding cutting tools (12) along axes (Y-Y) parallel to the inclined ramp (30) for supporting each pair comprising cutting tool (12) and roller (2b) and which are concurrent on the axis (33) of the lower central roller (2a), or in the vicinity of this axis, a fourth roller (2a) being positioned above the casting (T) and the two latter rollers (2c) being mounted on each side of the fourth upper roller (2a).

4. Device according to Claim 3, characterised in that the two rollers (2c) placed on each side of the upper roller (2a) can be adjusted along axes (X-X) in a V shape, symmetrical with respect to the axial vertical plane (Pv) containing the axis (T-T) of the tubular casting, contained in a plane perpendicular to this longitudinal plane and which intersect on the axis (33) of the lower roller (2a) or in the vicinity of this axis (33), whereas the upper and lower rollers (2a) are adjustable radially in the axial vertical longitudinal plane.

5. Device according to one of Claims 3 and 4, characterised in that the upper and lower rollers (2a, 2c) are mounted on the shafts (4) of jacks (5) fixed to the frame (1) of the device and may be set T) of the tubular casting, contained in a plane perpendicular to this longitudinal plane and which intersect on the axis (33) of the lower roller (2a) or in the vicinity of this axis (33), whereas the upper and lower rollers (2a) are adjustable radially in the axial vertical longitudinal plane.

5. Device according to one of Claims 3 and 4, characterised in that the upper and lower rollers (2a, 2c) are mounted on the shafts (4) of jacks (5) fixed to the frame (1) of the device and may be set in rotation by motors (3) supported by these rods (4).

6. Device according to Claim 1, characterised in that, for each position on its inclined ramp (30) of a pair comprising cutting tool (12), corresponding roller (2b), the edge (12a) of the tool (12), driven by a suitable drive member (13), may be moved forwards or back in the plane containing the longitudinal axis (T-T) of the tubular casting and the generatrix (G) of contact of the roller (2b) with the wall (T1) or adjacent this plane, the carriage (6) for supporting the tool (12) and roller (2b) being moved longitudinally on the inclined ramp (30) for example by means of a screw nut system (8, 9) actuated by a speed reducer unit (11) housed in the fixedframe (31) supporting the carriage (6), the nut (8) being rendered integral with the movable carriage (6).

7. Device according to Claim 1 intended for cutting into sections a tubular casting (T) provided with a socket (21) intended to be supported on means for handling and axially retaining the said casting (T) comprising rollers (23) located below the socket, characterised in that the said means comprise a roller (22) located inside the casting (T) against the edge of its socket (21), an annular groove (22a) provided for receiving the corresponding annular profile of said socket being provided in the periphery of this inner roller (22), which may thus tighten the socket (21) of the casting (T) against the lower support rollers (23).

FIG.1

FIG. 2

FIG.3

0 105 228

FIG. 4

FIG. 5

FIG. 6

FIG. 7

FIG. 8